Europäisches Patentamt

(19) European Patent Office

Office européen des brevets

(11) Numéro de publication: **0 270 429 B1**

(12) **FASCICULE DE BREVET EUROPEEN**

(45) Date de publication du fascicule du brevet: **30.01.91**

(21) Numéro de dépôt: **87402567.9**

(22) Date de dépôt: **13.11.87**

(51) Int. Cl.⁵: **G 11 B 11/10**

(54) **Tête de lecture en optique intégrée pour la lecture d'informations enregistrées sur un support magnétique.**

(30) Priorité: **18.11.86 FR 8616002**

(43) Date de publication de la demande:
**08.06.88 Bulletin 88/23**

(45) Mention de la délivrance du brevet:
**30.01.91 Bulletin 91/05**

(84) Etats contractants désignés:
**DE GB IT NL**

(56) Documents cités:
**DE-A-3 543 775    US-A-3 996 576
FR-A-2 355 299    US-A-4 220 395
US-A-3 576 547**

**PATENT ABSTRACTS OF JAPAN, vol. 7, no. 101
(P-194)1246r, 28 avril 1983; & JP-A-58 23 337
(CANON K.K.) 12-02-1983**

**IEEE TRANSACTIONS ON INSTRUMENTATION
AND MEASUREMENT, vol.25, no. 1, mars 1976,
pages 1-7, New York, US; J.E. THOMPSON et
al.: "Optical measurement of high electric and
magnetic fields"**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Valette, Serge
41, rue des Eaux Claires
F-38100 Grenoble (FR)**

(74) Mandataire: **Mongrédien, André et al
c/o BREVATOME 25, rue de Ponthieu
F-75008 Paris (FR)**

Courier Press, Leamington Spa, England.

**Description**

La présente invention a pour objet une tête de lecture en optique intégrée pour le lecture d'informations enregistrées sur un support magnétique.

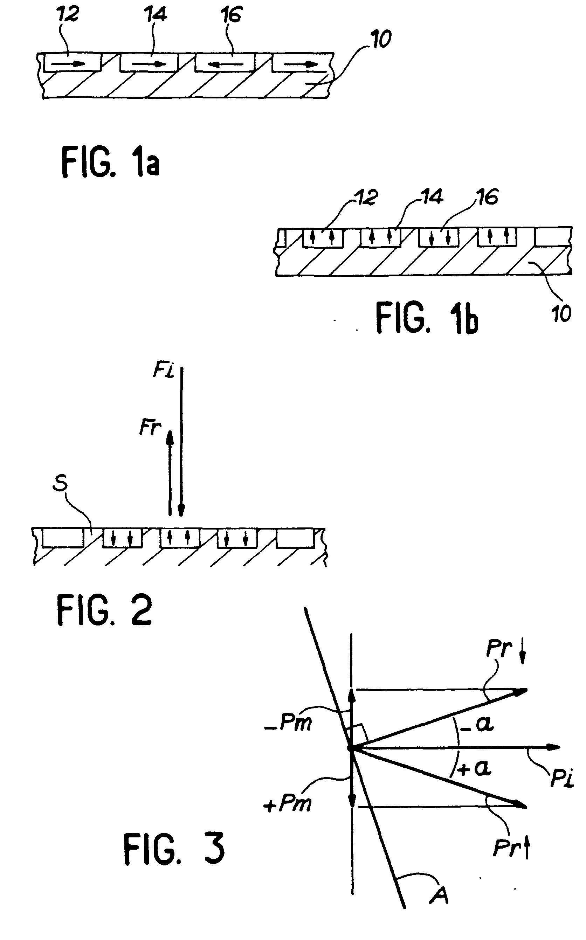

L'enregistrement magnétique est une technique qui consiste à créer dans un support magnétique (disque, bande, etc.) des zones dont l'aimantation présente une direction bien déterminée. Sur la figure 1a, on voit une couche magnétique (10) dans laquelle des domaines 12, 14, 16, etc. ont une aimantation parallèle au plan du support mais dirigée tantôt vers la droite, tantôt vers la gauche. On parle alors d'enregistrement parallèle. Sur la figure 1b, une même couche magnétique 10 possède des domains 12, 14, 16 dont l'aimantation est perpendiculaire au plan du support et dirigée tantôt vers le haut, tantôt vers le bas. On parle alors d'enregistrement perpendiculaire.

Dans chacun de ces cas, on peut associer à une direction d'aimantation un état logique 1 et à la direction opposée un état logique 0. L'ensemble du support contient alors une information binaire faite de 1 et de 0.

La densité d'informations est plus grande dans le cas de l'enregistrement perpendiculaire. C'est donc ce type d'enregistrement qui se développe aujourd'hui et c'est lui qu'on prendra comme exemple dans ce qui suit, dans que l'enregistrement parallèle soit exclu pour autant de l'application de l'invention.

La lecture d'un support magnétique s'effectue à l'aide d'une tête de lecture apte à détecter le sens de l'aimantation du support. A cette fin, on peut utiliser un dispositif comprenant une pièce polaire entourée d'un bobinage. Le passage du support magnétique sous cette pièce polaire induit un courant dans le bobinage, dont le sens indique la direction de l'aimantation du support.

Cependant, pour des raisons qui tiennent à la technologie des têtes de lecture magnétiques, il n'est guère possible de tirer parti au mieux des possibilités offertes par l'enregistrement perpendiculaire. C'est la raison pour laquelle on tente de mettre en oeuvre des moyens de lecture optique de tels supports, car les dispositifs optiques ne souffrent pas des mêmes limitations. Le principe de la lecture optique d'un support magnétique est connu et il est rappelé sur les figures 2 et 3.

Un milieu magnétique possède la propriété de transformer un faisceau lumineux à polarisation linéaire en un faisceau lumineux à polarisation elliptique. Quand on travaille en réflexion, ce phénomène est appelé effet KERR. En transmission on parle d'effet Faraday.

Dans le cas où l'on envoie un faisceau incident Fi de polarisation linéaire Pi sur un support magnétique S, le faisceau réfléchi Fr (figure 2) présente une polarisation elliptique Pr résultat de l'apparition d'une petite composante de direction perpendiculaire à la direction de polarisation du faisceau incident (figure 3). La combinaison de la composante Pi de polarisation incidente et de la composante +Pm ou −Pm due à l'effet du champ magnétique donne des vecteurs Pr↑ ou Pr↓, qui font avec Pi un angle +a ou −a, selon la direction du champ magnétique qui a interagi avec le faisceau lumineux.

Pour détecter le sens de rotation, ou utilise un analyseur dont la direction n'est pas perpendiculaire à la direction de polarisation incidente Pi, mais perpendiculaire à l'une des directions Pr↑ ou Pr↓. C'est ce qui est représenté sur la figure 3 où la ligne A représente la direction de polarisation transmise par l'analyseur.

Dans un tel montage, on obtient, derrière l'analyseur, une intensité lumineuse égale soit à 0, soit à $A^2 \sin^2 2a$ (où A est une amplitude). Dans le cas de figure de la figure 3, l'analyseur est monté perpendiculairement à Pr↓, ce qui implique que l'intensité du faisceau lumineux transmis par cet analyseur sera nulle si l'induction magnétique lue est dirigée vers le bas (↓) et égale à $A^2 \sin^2 2a$ si l'induction magnétique lue est dirigée vers le haut (↑).

Si une telle technique donne satisfaction à certains égards, elle présente cependant un inconvénient qui est de ne pas pouvoir être mise en oeuvre en optique intégrée. Pour comprendre cette impossibilité, il faut rappeler brièvement en quoi consiste une structure de guidage réalisée en optique intégrée.

Une telle structure comprend généralement une couche de guidage mince d'indice fort intercalée entre deux couches d'indice faible. Le faisceau lumineux se propage dans cette couche de guidage, avec une partie évanescente dans chacune des couches adjacentes. Or, dans une telle structure deux modes de propagation sont possibles: un mode dit transverse électrique (noté TE), pour lequel le champ électrique associé à l'onde électromagnétique est dans le plan de la couche de guidage, et un mode dit transverse magnétique (noté TM), pour lequel c'est le champ magnétique qui est dans le plan de la couche. Toute onde inclinée par rapport à ces deux modes se décompose nécessairement en deux composantes, l'une TE, l'autre TM.

Il résulte de cette contrainte qu'il est impossible, en optique intégrée, de réaliser un polariseur et un analyseur qui ne seraient pas croisés (c'est-à-dire dont les directions de polarisation ne seraient pas à 90° l'une de l'autre). Il en résulte qu'on ne peut pas réaliser le montage illustré sur la figure 3 en optique intégrée, puisque ce montage utilise un polariseur et un analyseur qui ne sont pas croisés.

Si l'on analyse le faisceau réfléchi par une couche magnétique selon une direction perpendiculaire à Pi, on détectera les composantes +Pm ou −Pm. Malheureusement, le signal électrique mesuré sera le même dans les deux cas, soit $A^2 \sin^2 a$. Seule une mesure de la phase permettrait de distinguer ces deux polarisations.

Il est donc exclu, en principe, d'utiliser une structure optique intégrée pour la lecture de supports magnétiques. Cette exclusion est regrettable car l'optique intégrée présente de nombreux avantages

EP 0 270 429 B1

(compacité, stabilité, facilité de fabrication, etc.). Des têtes de lecture réalisées dans cette technique seraient donc très avantageuses.

JP—A—58 23337 décrit une tête de lecture qui est réalisée en partie en optique integrée. Un faisceau lumineux est guidé dans une couche transparente déposée sur un circuit integré vers une lentille et est réflechi sur un milieu d'information. Après réflexion le faisceau est reconduit dans la couche transparente. La part du faisceau dont la polarisation a été convertie par l'effet magnéto-optique est dirigée vers un détecteur.

La présente invention a justement pour but de contourner cette difficulté. A cette fin, et selon l'invention, on ne fait pas appel à un analyseur pour détecter la composante de polarisation résultant de l'action du champ magnétique, mais à un ensemble inteférométrique qui permet de détecter la phase de cette composante réfléchie.

Selon une deuxième caractéristique de l'invention, le faisceau lumineux incident se propage en mode TE, mais l'ensemble interférométrique fonctionne en mode TM. Pour cela, un réseau convertisseur de mode (TE→TM) est placé sur le trajet de retour du faisceau, de telle sorte que la part de ce faisceau qui est 'toujours en mode TE après réflexion sur le support magnétique soit convertie partiellement en mode TM. Le faisceau de conversion va constituer un faisceau de référence avec lequel on fera interférer le faisceau de mesure résultant de l'interaction magnéto-optique. Ce faisceau de référence est particulièrement utile car il aura subi les mêmes effets que le faisceau de mesure. En particulier, ces deux faisceaux seront soumis aux mêmes fluctuations résultant des variations de la hauteur de vol (c'est-à-dire de la distance séparant le patin de vol du support magnétique).

Grâce à la constitution de ce faisceau de référence à partir du faisceau de retour, il sera possible, par interférométrie, de savoir si le mode TM réfléchi par le support magnétique possède une phase ou la phase opposée et aucun phénomène parasite n'affectera cette détection de phase.

Enfin, l'ensemble interférométrique fonctionnant en mode TM, il sera insensible aux éventuels faisceaux parasites provenant du faisceau incident, car ceux-ci seront en mode TE.

De façon plus précise, la présente invention a pour objet une tête de lecture en optique intégrée, pour la lecture d'informations enregistrées sur un support magnétique présentant une aimantation dirigée selon l'un ou l'autre de deux sens contraires, cette tête comprenant:

une source lumineuse émettant un faisceau de lumière,

une structure de guidage optique de ce faisceau, cette structure comprenant un substrat et un empilement d'une première, d'une deuxième et d'une troisième couches transparentes, la deuxième couche ayant un indice plus fort que celui des première et troisième couches qui l'encadrent, le faisceau de lumière émis par la source pénétrant dans la deuxième couche de la structure; cette tête étant caractérisée par le fait qu'elle comprend:

un polariseur intégré à la structure et constitué par une couche métallique déposée sur la troisième couche, ce polariseur atténuant le mode de propagation transverse magnétique et favorisant ainsi le mode de propagation transverse électrique,

une optique de collimation intégrée à la structure et disposée à la sortie du polariseur et délivrant un faisceau de lumière parallèle en mode TE,

un miroir présentant une surface parabolique perpendiculaire au plan des couches et obtenu par gravure de celles-ci, ce miroir recevant le faisceau de lumière parallèle provenant de l'optique de collimation et délivrant un faisceau en mode TE focalisé dirigé vers le support magnétique à lire, ce faisceau se réfléchissant sur ce support, ce qui donne naissance à une faisceau de retour comprenant une première part toujours en mode TE en une seconde part en mode TM, cette seconde part ayant une phase qui dépend du sens de l'aimantation du support, ce faisceau de retour venant frapper le miroir parabolique et s'y réfléchir, et donnant naissance à un faisceau parallèle de retour,

un réseau de diffraction convertisseur de polarisation, placé sur le trajet du faisceau de retour parallèle et intégré à la structure, ce réseau ayant une inclinaison par rapport à la direction du faisceau de retour et un pas tels que la part en mode TE du faisceau de retour est partiellement convertie en mode TM par diffraction de Bragg, la part en mode TM de ce même faisceau de retour traversant le réseau sans atténuation,

un ensemble interférométrique fonctionnant en mode TM et apte à faire interférer le faisceau en mode TM diffracté par le réseau de diffraction et le faisceau en mode TM ayant traversé ce réseau,

un photodétecteur disposé à la sortie de l'ensemble interférométrique, ce photodétecteur délivrant un signal électrique dont une composante dépend finalement du sens de l'aimantation lue sur le support.

De toute façon les caractéristiques de l'invention apparaîtront mieux à la lumière de la description qui va suivre. Cette description porte sur des exemples de réalisation qui n'ont naturellement rien de limitatif. Des dessins sont annexés à cette description sur lesquels:

la figure 1, déjà décrite, illustre le principe de l'enregistrement magnétique,

la figure 2, déjà décrite, montre le principe de la lecture optique d'un support magnétique,

la figure 3, déjà décrite, montre les divers composantes en jeu dans une technique de lecture optique,

la figure 4 montre, en vue de dessus, une tête de lecture en optique intégrée selon l'invention,

la figure 5 montre, en coupe, la structure de guidage,

la figure 6 montre un exemple de réalisation d'un polariseur,

la figure 7 montre un exemple de réalisation d'un miroir,

3

la figure 8 montre un exemple de réalisation d'un réseau,

la figure 9 montre une tête de lecture selon l'invention, munie de divers assessoires,

la figure 10 montre un mode de réalisation d'un déphaseur,

la figure 11 montre un mode de réalisation d'un guide optique de sortie,

la figure 12 montre un mode de réalisation d'un détecteur intégré,

la figure 13 illustre une variante dans laquelle la source lumineuse est intégrée à la structure de guidage.

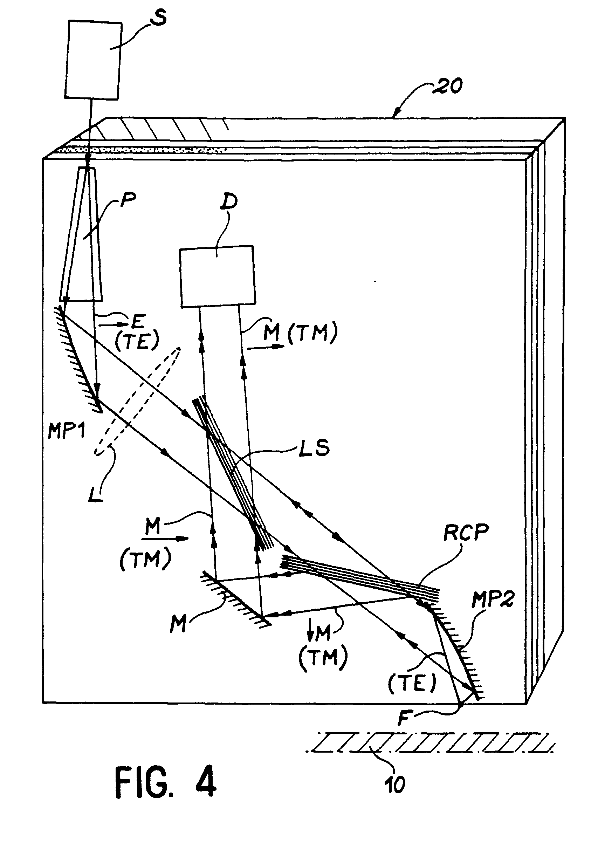

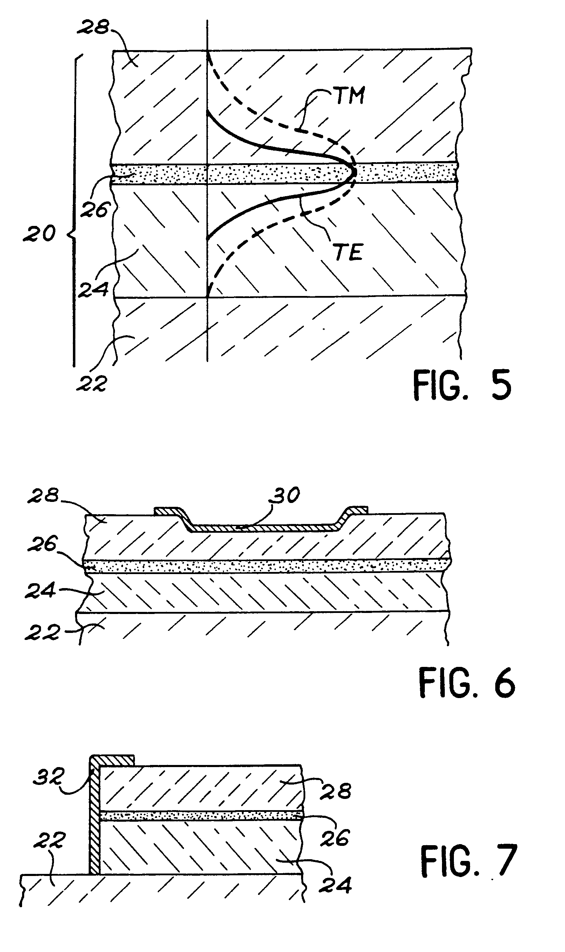

Le dispositif représenté sur la figure 4 comprend une source lumineuse S et une structure de guidage 20 dont on comprendra mieux la constitution après la description de la figure 5. Dans cette structure, sont intégrés divers composants, à savoir, un polariseur P, une optique de collimation qui, dans l'exemple illustré, est constituée par un miroir cylindrique à section parabolique MP1, mais qui pourrait être constituée par un miroir plan et une lentille L (en tirets); le dispositif comprend encore un miroir cylindrique à section parabolique MP2, qui focalise la lumière qu'il reçoit en un point F, un réseau convertisseur de polarisation RCP, un miroir M placé sur le trajet du faisceau diffracté par le réseau RCP, et une lame semi-transparente LS, qui recombine le faisceau qu'elle réfléchit partiellement avec le faisceau qui provient du miroir M. L'ensemble comprend encore un photodétecteur D intégré ou non à la structure de guidage.

Le fonctionnement de ce dispositif est le suivant. Le polariseur P atténue le mode TM présent dans le faisceau délivré par la source S et délivre un faisceau exclusivement en mode TE (comme on le comprendra mieux après la description de la figure 6). Cela signifie que le champ électrique E est dans le plan de la figure. L'optique de collimation donne de ce faisceau divergent un faisceau de lumière parallèle qui vient frapper le miroir parabolique MP2. Le faisceau réfléchi converge en F, à proximité du support magnétique 10 que l'on veut lire.

Après réflexion sur ce support, le faisceau qui retourne dans la structure de guidage présente une part en mode TE (c'est la part la plus importante) et une part en mode TM, qui résulte de l'effet magnéto-optique produit par le support. La part en mode TM possède un champ magnétique M dans le plan de la figure (et par conséquent, un champ électrique perpendiculaire au plan de cette même figure).

L'intensité du mode TE est $A^2(1-\sin^2 a)$ et celle du mode TM est $A^2\sin^2 a$, mais avec une amplitude $A\sin a$ ou $-A\sin a$ selon la direction de l'aimantation rencontrée.

Le faisceau de retour, une fois réfléchi par le miroir parabolique MP2, rencontre le réseau RCP. Comme on le comprendra mieux par la suite, les modes TE et TM n'ont pas exactement la même longueur d'onde effective, car les indices effectifs qui caractérisent ces modes ne sont pas les mêmes. L'inclinaison du réseau par rapport au faisceau incident (où si l'on veut l'angle d'incidence $\theta$ par rapport à la normale au réseau, et le pas $p$ du réseau sont réglés pour que soit satisfaite la condition de Bragg bien connue: $2p \cdot \cos\theta = \lambda TE$). Cette condition n'est satisfaite que pour le mode TE. Dans cette expression, $\lambda TE$ est la longueur d'onde correspondant au mode TE, à savoir $\lambda 0/NeffTe$, si $\lambda 0$ est la longueur d'onde dans le vide du faisceau incident et NeffTE l'indice effectif du mode TE.

Dans ces conditions, la partie du faisceau incident qui est en mode TE sera partiellement convertie (environ 50%) en mode TM par diffracti. Le faisceau diffracté sera donc en mode TM. Pac ailleurs, la partie du faisceau en mode TM qui frappe le réseau ne sera pas diffractée ca sa longueur d'onde $\lambda TM$ ne satisfait pas à la condition de Bragg définie plus haut.

Le miroir M réfléchit le faisceau diffracté vers une lame semi-transparente LS qui peut être aussi constituée par un réseau. Cette lame réfléchit partiellement le faisceau incident en mode TM.

Les éléments RCP, M et LS constituent donc un ensemble interférométrique. Naturellement, on peut en concevoir d'autres, en losange, avec deux bras parallèles etc.

Les deux faisceaux en mode TM interfèrent et le résultat de l'intéférence est détecté par le détecteur D.

Le faisceau diffracté par le réseau RCP constitue un faisceau de référence qui provient du mode TE, lequel a subi toutes les fluctuations auxquelles a été soumis le mode TM résultant de la réflexion sur le support magnétique.

Sil l'on désigne par $r$ l'amplitude du faisceau de référence et par $m$ l'amplitude du faisceau de mesure, l'interférence fera apparaître une intensité de la forme:

$$r^2 + m^2 + 2rm \cos \varphi$$

où l'angle $\varphi$ est justement égal à 0 ou $\pi$ selon le sens de l'aimantation du support. On détectera donc un signal égal à:

$$r^2 + m^2 + 2rm \text{ ou à } r^2 + m^2 - 2rm.$$

La quantité $r^2 + m^2$ représente une composante fixe. L'écart de signal selon la direction d'aimantation est égal à $4rm$. Cet écart est proportionnel à $r$. Le rapport signal sur bruit est également proportionnel à $rm$. La relativement grande amplitude $(r)$ du faisceau de référence par rapport à l'amplitude $(m)$ du faisceau de mesure est donc dans certains cas un facteur avantageux, tant en ce qui concerne la sensibilité que le rapport signal sur bruit.

La figure 5 montre, en coupe, la structure de guidage 20. Une telle structure comporte, de manière connue, un substrat 22, par exemple en silicium, une première couche 24, par exemple en silice $SiO_2$

d'indice 1,45, une seconde couche 26, par exemple en $Si_3N_4$ d'indice 2 et une troisième couche 28, par exemple en $SiO_2$ d'indice 1,45. L'épaisseur des premières et troisième couches est de l'ordre de 1,5 à 3 μm. Celle de la couche intercalaire de l'ordre de 0,1 à 0,2 μm. L'onde lumineuse est guidée par la couche 26. En réalité, l'onde est présente dans chacune des couches adjacentes 24 et 28 sous forme d'ondes évanescentes. Cependant, l'étalement du faisceau n'est pas le même pour le mode de propagation TE et pour le mode de propagation TM. Le mode TM est plus étalé que le mode TE.

L'indice effectif d'un faisceau lumineux se propageant dans une telle structure dépend non seulement de l'indice réel des couches traversées, mais aussi des dimensions de celles-ci et de la nature du mode. Comme les modes TE et TM n'ont pas la même répartition spatiale, on conçoit qu'ils n'aient pas les mêmes indices effectifs. Si l'on désigne par λ0 la longueur d'onde dans le vide de la lumière utilisée et par NeffTE et NeffTM les indices effectifs en mode TE et en mode TM, ces modes présenteront deux longueurs d'ondes différentes λTE et λTM:

$$\lambda TE = \frac{\lambda 0}{NeffTE} \quad et \quad \lambda TM = \frac{\lambda 0}{NeffTM}$$

L'écart de longueur d'onde Δλ dépend de l'écart d'indices effectifs ΔNeff par la formule:

$$\frac{\Delta\lambda}{\lambda} = \frac{\Delta Neff}{Neff}$$

L'écart ΔNeff est d'environ 0,1 et Neff est de l'ordre de 1,6. L'écart Δλ est donc d'environ 500 Angströms.

C'est sur cet écart de longueur d'onde entre les modes TE et TM que sont basés les divers composants apparaissant dans le dispositif de la figure 4.

Pour que cet écart soit le plus grand possible, on donnera à la couche intercalaire 26 une épaisseur faible, par exemple de l'ordre de 0,1 à 0,2 μm.

Il faut observer que si la structure de collimation travaillant sur le faisceau d'entrée peut être réalisée sous forme catadioptrique ou dioptrique (c'est-à-dire avec un miroir ou une lentille), en ce qui concerne la structure de collimation travaillant sur le faisceau de retour, elle doit nécessairement être catadioptrique, car le faisceau de retour contient deux modes différents TE et TM, de longueurs d'ondes différentes, alors que le faisceau d'entrée ne contient qu'un seul mode TE, à une seule longueur d'onde.

Les composants utlisés dans le dispositifs de la figure 4 vont maintenant être décrits plus en détail.

Le dispositif représenté sur la figure 6, tout d'abord, est un polariseur correspondant au polariseur P de la figure 4. La couche supérieure 28 est partiellement gravée et la partie gravée est recouverte d'une couche métallique 30. Le mode TM sera fortement absorbé par une telle couche, du fait de son étalement, alors que le mode TE ne sera pas affecté. Un tel dispositif élimine donc la part en mode TM comprise dans le faisceau incident et délivre un faisceau exclusivement en mode TE.

La figure 7 représente un miroir. Les couches 24, 26, 28 sont gravées jusqu'au substrat 22. Une couche métallique 32 est déposée sur le flanc des couches gravées (mais cette couche n'est pas indispensable, le dioptre couches-air pouvant, dans certains cas, constituer un dioptre à réflexion totale).

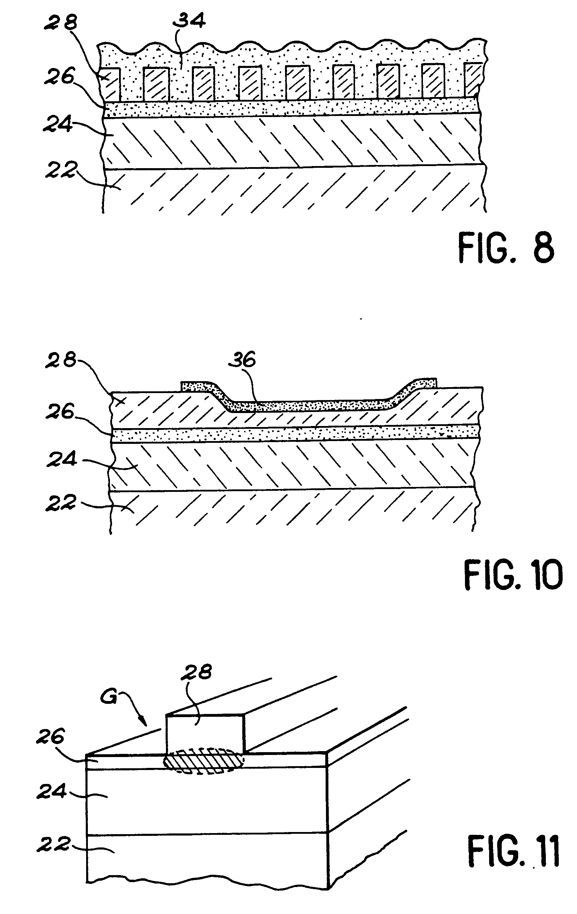

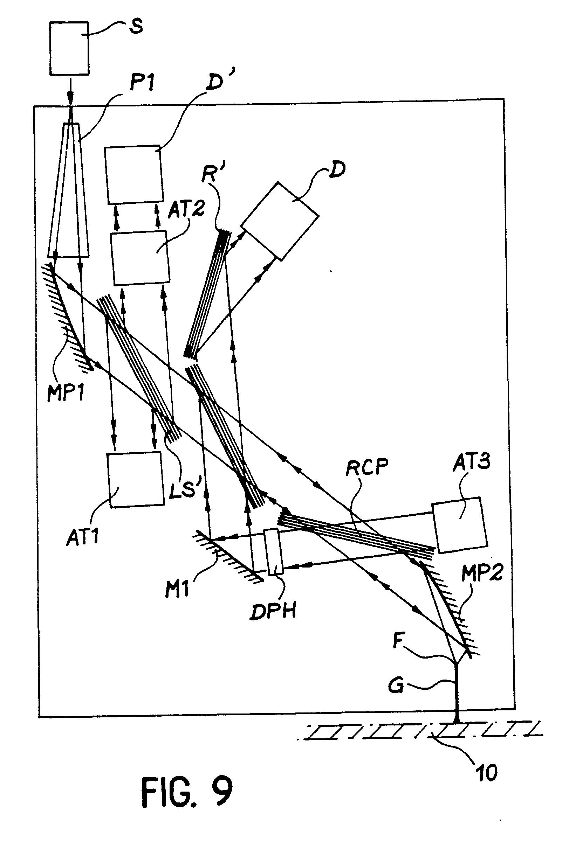

La figure 8 montre un réseau de diffraction. La couche supérieure 28 est gravée jusqu'à la couche 26 et un diélectrique 34 est déposé sur l'ensemble gravé. Les conditions de propagation varient donc périodiquement dans la couche de guidage, ce qui conduit à des phénomènes de diffraction (réseau dit "d'indice").

Le réseau RCP doit pouvoir distinguer deux longueurs d'onde distances de Δλ=|λTE−λTM|. Dans l'exemple donné plus haut, on a vu que Δλ était de l'ordre de 500 Angströms. Mais la sélectivité du réseau doit être supérieure aux fluctuations de longueur d'onde qui peuvent résulter de divers phénomènes parasites notamment de la fluctuation de longueur d'onde de la source lumineuse. Cette incertitude est de l'ordre de 100 Angströms. La sélectivité en longueur d'onde du réseau doit donc être comprise entre 100 et 500 Angströms environ.

Le dispositif de la figure 4 représente en fait un schéma de principe. Dans la réalité, la tête de lecture se complèter par divers moyens accessoires mais utiles, qui sont représentés sur la figure 9.

Sur cette figure, la tête de lecture comprend, en plus des éléments déjà représentés sur la figure 4, une seconde lame semi-transparente LS' associée à un second détecteur D', un réseau supplémentaire R' disposé avant le détecteur principal D, un déphaseur DPH situé sur le trajet du faisceau diffracté par le réseau RCP, divers atténuateurs AT1, AT2, AT3, et un conduit de guidage G à la sortie du dispositif.

Le détecteur D' permet de détecter l'intensité du faisceau de retour et permet une auto-régulation de la source lumineuse.

Le réseau R' réfléchit le mode TM et laisse passer sans atténuation le mode TE, si ce mode subsiste dans le faisceau à mesurer. Ce miroir sert donc à parfaire la sélectivité de l'ensemble interférométrique.

Le déphaseur DPH est important pour la raison suivante. Les faisceaux qui interfèrent, à savoir le faisceau de référence diffracté par le réseau RCP et le faisceau de mesure qui a traversé ce même faisceau, présentent l'un par rapport à l'autre une phase qui n'est pas égale en toute rigueur à π ou à 0, selon la direction du champ magnétique rencontré. Cette phase est égale à (φM+φO) où M est soit à O, soit à π, et où φ0 est un déphasage dû à la différence de chemins optiques suivis par les deux faisceaux. Ce détecteur D détecte donc l'un des deux signaux suivants:

$$r^2+m^2+2 \text{ rm cos } \varphi0$$

$$r^2+m^2-2 \text{ rm cos } \varphi0.$$

S'il advient malencontreusement que, par construction, φ0 soit égal à π/2 ou plus généralement à (2k+1)π/2, la différence entre les deux valeurs détectées sera nulle. Pour éviter cette situation désavantageuse on ajoute un déphaseur DPH qui introduit un déphasage φ1. Dans le signal détecté, le terme sensible à la phase sera donc de la forme cos (φ0+φ1). S'il advient que φ0 soit proche de (2k+1)π/2, on donnera à φ1 une valeur proche de (2k'+1)π/2, pour que la phase totale soit proche de (k+k'+2)π, ce qui conduit à une sensibilité maximale.

Une mode de réalisation possible d'un tel déphaseur est représenté sur la figure 10. La couche supérieure 28 est partiellement gravée et la partie gravée est recouverte d'un diélectrique 36. Ce diélectrique change la constante de propagation dans la couche de guidage 26 et introduit un déphasage proportionnel à la longueur du diélectrique.

Quant au guide de sortie G, il dispsense d'avoir un point focal F disposé sur la face de sortie de la tête de lecture. Avec un tel guide, il suffit de placer l'entrée de celui-ci au point focal F et de réaliser un conduit de guidage vers la face de sortie. Ce conduit n'est d'ailleurs pas nécessairement rectiligne.

La figure 11 montre un exemple de réalisation d'un tel guide. La couche supérieure 28 est gravée pour ne laisser subsister qu'un barreau rectiligne ou curviligne de largeur de l'ordre de 1 μm. On montre alors que le faisceau lumineux va suivre cette super-structure dans la couche de guidage.

On peut d'ailleurs utiliser plusieurs conduits de guidage de ce type, disposés soit en parallèle, soit en éventail.

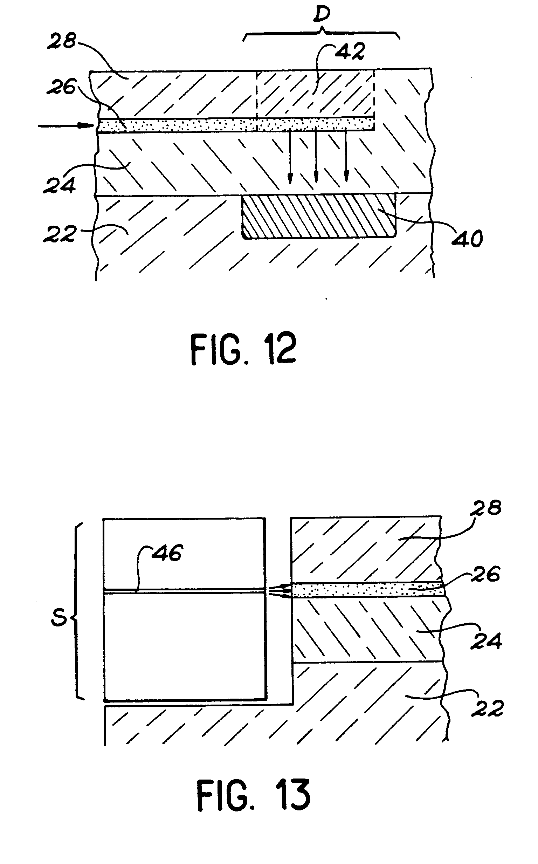

Le détecteur D peut être intégré à la tête. Un détecteur en optique intégrée est décrit dans la demande de brevet européen 0 198 735 au nom du présent demandeur. Comme représenté sur la figure 12, ce détecteur comprend une jonction PN référencée 40 formée dans le substrat de silicium 22 et un réseau de diffraction 42 apte à renvoyer le faisceau se propageant dans la couche de guidage 26 vers la jonction 40.

Un tel détecteur est en soi sélectif par rapport au mode de propagation. Il peut être conçu pour n'être sensible qu'au mode TM, ce qui accroît encore la sélectivité du dispositif interférométrique.

La source S peut être reliée par fibre optique à la structure de guidage. Mais elle peut aussi être intégrée à celle-ci, comme illustré sur la figure 13. Dans ce cas, la source S est fixée sur le substrat 22 et montée de telle sorte que sa couche active 46 soit à la hauteur de la couche de guidage 26.

Les réseaux utilisés dans le dispositif décrit peuvent être obtenus par holographie ou mieux par masqueur électronique.

On peut choisir un angle d'incidence de 63°43 (qui correspond à arctg 2, valeur facile à obtenir avec un masqueur électronique). Le pas du réseau est alors égal à λ0/2Neffcosθ.

Pour une longueur d'onde de 0,8 μm et un indice de 1,6 le pas est alors de 0,56 μm.

Les réseaux pourront comprendre une centaine de traits. Ils auront donc une largeur d'environ 40 μm, ce qui est peu: l'encombrement des composants est faible.

La tête de lecture qui vient d'être décrite peut tenir sur une plaquette de 1 mm par 1 mm ou moins. Cette tête peut être montée sur un patin de vol classique, qui peut contenir également une tête magnétique d'enregistrement. Les fluctuations de la hauteur de vol n'ont pas d'importance puisque, comme on l'a vu, les deux faisceaux qui interfèrent subissent les mêmes fluctuations. Les effets des celles-ci n'affectent donc pas le résultant final de la mesure.

Le dispositif qui vient d'être décrit peut être modifié sans qu'on sorte pour autant de l'invention. C'est ainsi, par exemple, qu'on peut utiliser deux détecteurs D et D' associés à deux miroirs sélectifs LS et LS' pour le mode TM et obtenir deux systèmes de franges d'interférence déphasés de π et deux signaux différents:

$$\text{sur D: } a^2+b^2+2ab,$$

$$\text{sur D': } a^2+b^2-2ab.$$

On peut alors, en même temps que les détecteurs, intégrer un amplificateur différentiel et donc observer une tension proportionnelle à 4ab permettant une meilleure sensibilité.

De même, dans le cas d'une entrée de la lumière par fibre monomode, il peut être intéressant d'utiliser un microguide d'entrée complété par un entonnoir. Cette disposition permet d'adapter au mieux le couplage circuit optique-fibre optique, tout en gradant un point source de taille micronique compatible avec le point de focalisation en sortie, qui doit être le plus petit possible.

De plus, cela simplifie le problème du positionnement du clivage d'entrée par rapport au plan focal du premier miroir parabolique.

Enfin, il peut être intéressant, dans certains cas, de ne pas détecter le signal optique directement sur la puce à l'aide des détecteurs intégrés, mais au contraire de la conduire jusqu'à une zone de traitement sous forme optique avec un transport par fibres optiques multimodes ou monomodes.

Il convient de rajouter alors deux éléments optiques convergents et intégrés permettant de focaliser les faisceaux optiques de sortie vers ces fibres optiques (miroirs ou lentilles intégrées).

**Revendications**

1. Tête de lecture en optique intégrée, pour le lecture d'informations enregistrées sur un support magnétique (10) présentant une aimantation dirigée selon l'un ou l'autre de deux sens contraires, cette tête comprenant:

une source lumineuse (S) émettant un faisceau de lumière,

une structure de guidage optique de ce faisceau, cette structure comprenant un substrat (22) et un empilement d'une première, d'une deuxième et d'une troisième couches transparentes (24, 26, 28), la deuxième couche (26) ayant un indice plus fort que celui des première et troisième couches qui l'encadrent (24, 28), le faisceau de lumière émis par la source pénétrant dans la deuxième couche (26) de la structure, cette tête étant caractérisée par le fait qu'elle comprend:

un polariseur (P) intégré à la structure et constitué par une couche métallique (30) déposée sur la troisième couche (28), ce polariseur atténuant le mode de propagation transverse magnétique (TM) et favorisant ainsi le mode de propagation transverse électrique (TE),

une optique de collimation (MP1) intégrée à la structure et disposée à la sortie du polariseur et délivrant un faisceau de lumière parallèle en mode (TE),

un miroir (MP2) présentant une surface parabolique perpendiculaire au plan de couches et obtenu par gravure de celles-ci, ce miroir recevant le faisceau de lumière parallèle provenant de l'optique de collimation et délivrant un faisceau en mode (TE) focalisé dirigée vers le support magnétique à lire, ce faisceau se réfléchissant sur ce support, ce qui donne naissance à un faisceau de retour comprenant une première part toujours en mode (TE) et une seconde part en mode (TM), cette seconde part ayant une phase qui dépend du sens de l'aimantation du support, ce faisceau de retour venant frapper le miroir parabolique (MP2) et s'y réfléchir, et donnant naissance à un faisceau parallèle de retour,

un réseau de diffraction convertisseur de polarisation (RCP), placé sur le trajet du faisceau de retour parallèle et intégré à la structure, ce réseau (RCP) ayant une inclinaison (θ) par rapport à la direction du faisceau de retour et un pas (p) tels que la part en mode (TE) du faisceau de retour est partiellement convertie en mode (TM) par diffraction de Bragg, la part en mode (TM) de ce même faisceau de retour traversant le réseau (RCP) sans atténuation,

un ensemble interférométrique (M, LS) fonctionnant en mode (TM) et apte à faire interférer le faisceau en mode (TM) diffracté par le réseau de diffraction et le faisceau en mode (TM) ayant traversé ce réseau,

un photodétecteur (D) disposé à la sortie de l'ensemble interférométrique, ce photodétecteur délivrant un signal électrique dont une composante dépend finalement du sens de l'aimantation lue sur le support.

2. Tête de lecture selon la revendication 1, caractérisée par le fait que l'ensemble interférométrique comprend un réflecteur (M) disposé sur le trajet du faisceau diffracté par le réseau convertisseur de polarisation (RCP), et une lame séparatrice (LS) placée sur le trajet du faisceau de retour transmis par le réseau convertisseur, le faisceau réfléchi par le réflecteur (M) et le faisceau partiellement réfléchi par la lame séparatrice (LS) étant confondus et interférents, le photodétecteur (D) étant disposé sur le trajet commun de ces deux faisceaux.

3. Tête de lecture selon la revendication 1, caractérisée par le fait qu'il comprend en outre un déphaseur (DPH) placé sur le trajet du faisceau diffracté par le réseau convertisseur de polarisation (RCP).

4. Tête de lecture selon la revendication 1, caractérisée par le fait que la structure de guidage optique comprend en outre un microguide de lumière (G) ayant une extrémité placée au point de focalisation (F) du miroir parabolique (MP2) et une autre extrémité débouchant sur la face de sortie de la tête, à proximité du support magnétique à lire (10).

5. Tête de lecture selon la revendication 1, caractérisée par le fait que l'optique de collimation est constituée par un miroir (MP1) présentant une surface parabolique perpendiculaire au plan des couches et obtenue par gravure de celles-ci.

6. Tête de lecture selon la revendication 1, caractérisée par le fait que le photodétecteur (D) est intégré à la structure de guidage et comprend une jonction PN (40) intégrée dans le substrat (22) et un réseau de diffraction (42) intégré dans l'empilement de couches et apte à diffracter le faisceau guidé par la deuxième couche vers la jonction PN.

7. Tête de lecture selon la revendication 1, caractérisée par le fait que la source lumineuse (S) est couplée à la couche de guidage par une fibre optique.

8. Tête de lecture selon la revendication 1, caractérisée par le fait que la source lumineuse (S) est intégrée au substrat.

9. Tête de lecture selon la revendication 1, caractérisée par le fait que la structure de guidage comprend en outre une seconde lame séparatrice (LS') disposée sur le trajet de la lumière ayant traversé la première lame séparatrice et un second photodétecteur (D') placé sur le trajet du faisceau réfléchi par cette seconde lame séparatrice (LS').

# EP 0 270 429 B1

**Patentansprüche**

1. Optisch integrierter Lesekopf zum Auslesen von auf einem magnetischen Träger (10) aufgezeichneten Informationen, der eine Magnetisierung in die eine oder andere der entgegengesetzten Richtungen aufweist, wobei der Kopf umfaßt:

eine Lichtquelle (S), die ein Lichtbündel ausstrahlt,

eine optische Führungsanordnung für dieses Bündel, die ein Substrat (22) und eine Schichtanordnung aus einer ersten, zweiten und dritten transparenten Schicht (24, 26, 28) umfaßt, wobei die zweite Schicht (26) einen höheren Index als die erste und die dritte Schicht (24, 28), die sie umgeben, aufweist, und das von der Lichtquelle ausgestrahlte Lichtbündel die zweite Schicht (26) der Führungsanordnung durchdringt, und wobei der Lesekopf dadurch gekennzeichnet ist, daß er umfaßt:

einen in die Führungsanordnung integrierten Polarisator (P), der aus einer auf der dritten Schicht (28) aufliegenden Metallschicht (30) besteht, wobei der Polarisator die transversale magnetische Modenform der Ausbreitung (TM) abschwächt und so die transversale elektrische Modenform der Ausbreitung (TE) begünstigt,

eine in die Führungsanordnung integrierte Kollimationsoptik (MP1), die am Polarisatorausgang angeordnet ist und ein paralleles Lichtbündel in der (TE)-Modenform aussendet,

einen Spiegel (MP2), der eine parabolische, senkrecht zur Ebene der Schichten verlaufende Oberfläche aufweist, der durch Gravierung dieser Schichten entsteht, und der das von der Kollimationsoptik ausgehende, parallele Lichtbündel empfängt unf einen gebündelten Strahl in der (TE)-Modenform aussendet, der auf den abzulesenden magnetischen Träger gerichtet ist, wobei dieser Strahl auf dem Träger reflektiert wird, wodurch ein rückläufiger Strahl erzeugt wird, der einen ersten, sich immer noch in der (TE)-Modenform befindlichen Teil und einen zweiten Teil in der (TM)-modenform umfaßt, wobei der zweite Teil eine von der Magnetisierungsrichtung des Trägers abhängige Phase aufweist und wobei der rückläufige Strahl auf den Parabolspiegel (MP2) trifft und darin reflektiert wird und so einen parallelen rückläufigen Strahl erzeugt,

ein optises Polarisationsumwandlungs-Gitter (RCP), das auf der Strecke des parallelen rückläufigen Strahls angeordnet und in die Führungsanordnung integriert ist und das in Bezug auf die Richtung des rückläufigen Strahls einen Neigungswinkel ($\theta$) und eine Teilung (p) aufweist, die so beschraffen sind, daß der sich in der (TE)-Modenform befindliche Teil des rückläufigen Strahls durch Braggsche Streuung teilweise in die (TM)-Modenform umgewandelt wird, und der sich in der (TM)-Modenform befindliche Teil des gleichen rückläufigen Strahls durch das Gitter (RCP) ohne Abschwächung hindurchtritt,

eine in der (TM)-Modenform operierende Interferometer-Anordnung (M, LS), die geeignet ist, den Strahl in der (TM)-Modenform, der durch das optische Gitter gebrochen wird, und den Strahl in der (TM)-Modenform, der durch dieses Gitter hindurchgetreten ist, zur Interferenz zu bringen,

einen am Ausgang der Interferometer-Anordnung vorgesehener Photoempfänger (D), der ein elektrisches Signal aussendet, dessen eine Komponente schließlich von der auf dem Träger gelesenen Magnetisierungsrichtung abhängt.

2. Lesekopf nach Anspruch 1, dadurch gekennzeichnet, daß die Interferometer-Anordnung einen Reflektor (M) aufweist, der auf der Strecke des vom Polarisationsumwandlungs-Gitter (RCP) gebrochenen Strahls liegt, und eine Teilerplatte (LS), die auf der Strecke des vom Umwandlungsgitter übertragenen rückläufigen Strahls vorgesehen ist, wobei der vom Reflektor (M) reflektierte Strahl und der von der Teilerplatte (LS) teilweise reflektierte Strahl zusammengeführt und zur Interferenz gebracht werden und wobei der Photoempfänger (D) auf der gemeinsamen Strecke der beiden Strahlen vorgesehen ist.

3. Lesekopf nach Anspruch 1, dadurch gekennzeichnet, daß dieser ferner einen Phasenschieber (DPH) aufweist, der auf der Strecke des vom Polarisationsumwandlungs-Gitter (RCP) gebrochenen Strahls angeordnet ist.

4. Lesekopf nach Anspruch 1, dadurch gekennzeichnet, daß die optische Führungsanordnung ferner einen Mikrolichtleiter (G) aufweist, dessen erstes Ende sich am Brennpunkt (F) des Parabolspiegels (MP2) befindet und dessen anderes Ende auf der Ausgangsseite des Kopfes nahe des zu lesenden magnetischen Trägers (10) mündet.

5. Lesekopf nach Anspruch 1, dadurch gekennzeichnet, daß die Kollimationsoptik aus einem Spiegel (MP1) mit einer parabolischen Oberfläche besteht, die senkrecht zur Ebene der Schichten verläuft und durch Gravierung dieser Schichten entsteht.

6. Lesekopf nach Anspruch 1, dadurch gekennzeichnet, daß der Photoempfänger (D) in die Führungsanordnung integriert ist und einen in das Substrat (22) eingebauten PN-Übergang (40) umfaßt, sowie ein in die Schichtanordnung der Schichten integriertes optisches Gitter (42), das den von der zweiten Schicht in Richtung des PN-Übergangs gelenkten Strahl brechen kann.

7. Lesekopf nach Anspruch 1, dadurch gekennzeichnet, daß die Lichtquelle (S) mit der Führungsschicht mittels einer Lichtleitfaser gekoppelt ist.

8. Lesekopf nach Anspruch 1, dadurch gekennzeichnet, daß die Lichtquelle (S) in das Substrat integriert ist.

9. Lesekopf nach Anspruch 1, dadurch gekennzeichnet, daß das Führungsgefüge ferner eine zweite Teilerplatte (LS') aufweist, die auf der Strecke des Lichts, das durch die erste Teilerplatte hindurchgetreten ist, liegt, sowie einen zweiten Photoempfänger (D'), der auf der Strecke des von der zweiten Teilerplatte (LS') reflektierten Strahls liegt.

**Claims**

1. Reading head in integrated optics for the reading of informations recorded on a magnetic support (10) having a magnetization directed in one or other of two opposite directions, said head comprising:

a light source (S) emitting a light beam;

a structure for the optical guidance of said beam, said structure having a substrate (22) and a stack of a first, a second and a third transparent layers (24, 26, 28), the second layer (26) having a higher index than the first and third layers (24, 28) which border it, the light beam emitted by the source penetrating the second layer (26) of the structure, said head being characterized in that it comprises:

a polarizer (P) integrated into the structure and constituted by a metal layer (30) deposited on the third layer (28), said polarizer attenuating the transverse magnetic propagation mode (TM) and thus aiding the transverse electric propagation mode (TE);

a collimation optics (MP1) integrated into the structure and located at the output of the polarizer and supplying a parallel light beam in the mode (TE);

a mirror (MP2) having a parabolic surface perpendicular to the plane of the layers and obtained by etching the latter, said mirror receiving the parallel light beam from the collimation optics and suppllying a focused beam in the mode (TE) directed towards the magnetic support to be read, said beam being reflected on said support, which gives rise to a return beam having a first part still in the mode (TE) and a second part in the mode (TM), said second part having a phase dependent on the direction of the magnetization of the support, said return beam striking against the parabolic mirror (MP2) and is reflected thereon, giving rise to a parallel return beam;

a polarization converter diffractive grating (RCP) placed on the path of the parallel return beam and integrated into the structure, said grating (RCP) having an inclination ($\theta$) with respect to the direction of the return beam and a spacing (p) such that the part in the mode (TE) of the return beam is partly converted into the mode (TM) by Bragg diffraction, the part in the mode (TM) of said same return beam traversing the grating (RCP) without attenuation; an interferometric assembly (M, LS) functioning in the mode (TM) and able to bring about interference between the beam in the mode (TM) diffracted by the diffractive grating and the beam in the mode (TM) which has traversed said grating;

a photodetector (D) located at the output of the interferometric assembly, said photodetector supplying an electric signal, whereof one component is ultimately dependent on the direction of the magnetization read on the support.

2. Reading head according to Claim 1, characterized in that the interferometric assembly comprises a reflector (M) located on the path of the beam diffracted by the polarization converter grating (RCP) and a separating plate (LS) placed on the path of the return beam transmitted by the converter grating, the beam reflected by the reflector (M) and the beam partly reflected by the separating plate (LS) coinciding and interfering, photodetector (D) being located on the common path of these two beams.

3. Reading head according to Claim 1, characterized in that it also comprises a phase shifter (DPH) placed on the path of the beam diffracted by the polarization converter grating (RCP).

4. Reading head according to Claim 1, characterized in that the optical guidance structure also comprises a light microguide (G) having one end placed at the focusing point (F) of the parabolic mirror (MP2) and another end issuing onto the output face of the head in the vicinity of the magnetic support to be read (10).

5. Reading head according to Claim 1, characterized in that the collimation optics are constituted by a mirror (MP1) having a parabolic surface perpendicular to the plane of the layers and obtained by etching the latter.

6. Reading head according to Claim 1, characterized in that the photodetector (D) is integrated into the guidance structure and comprises a PN junction (40) integrated into substrate (22) and a diffractive grating (42) integrated into the stack of layers and able to diffract the beam guided by the second layer towards the PN junction.

7. Reading head according to Claim 1, characterized in that the light source (S) is coupled to the guidance layer by an optical fibre.

8. Reading head according to Claim 1, characterized in that the light source (S) is integrated into the substrate.

9. Reading head according to Claim 1, characterized in that the guidance structure also comprises a second separating plate (LS') positioned on the path of the light which has traversed the first separating plate and a second photodetector (D') placed on the path of the beam reflected by said second separating plate (LS').

FIG. 1a

FIG. 1b

FIG. 2

FIG. 3

**FIG. 4**

FIG. 5

FIG. 6

FIG. 7

28  34

26

24

22

FIG. 8

28  36

26

24

22

FIG. 10

28

G

26

24

22

FIG. 11

FIG. 9

FIG. 12

FIG. 13